# EUROPEAN PATENT APPLICATION

(11) **EP 4 212 014 A1**
(43) Date of publication of application: **19.07.2023**
(21) Application number: 22178207.1
(22) Date of filing: 09.06.2022
(51) Int. Cl.: A01K 13/00

(54) **PET TREATMENT COMB WITH A PLASMA GENERATOR**

(30) Priority: 17.01.2022 CN 202220122740 U
(71) Applicant: Shenzhen Petsmile Intelligent Technology Co., Ltd., Shenzhen City, Guangdong (CN)
(72) Inventor: Qin, Kangyin, Shenzhen City, Guangdong (CN)
(74) Representative: Meyer, Thorsten

(57) **Abstract**

A pet treatment comb (100) with a plasma generator (3) includes a handle (1), a comb tooth portion (2), a plasma generator (3), and a rotary connection structure (4). The comb tooth portion (2) and the plasma generator (3) is rotatably connected to the handle (1) through the rotary connection structure (4), the plasma generator (3) is arranged to provide plasma to the comb tooth portion (2). The angle of the comb tooth portion 2 can be flexibly adjusted by the rotary connection structure 4, which can care cats and dogs of different sizes and different parts of the pet. Furthermore, through plasma technology, while combing pets, bacteria, mites and viruses on pets are surrounded by plasma clusters until they are decomposed or lose activity, so as to achieve the effects of deodorization, disinfection and sterilization.

## Description

### RELATED APPLICATIONS

This application claims the benefit of priority to Chinese Utility Model Patent Application No. 202220122740.2 filed in January 17, 2022, which is hereby incorporated by reference in its entirety.

### FIELD OF THE INVENTION

The present invention relates to a field of pet care, more particularly to a pet treatment comb with a plasma generator.

### BACKGROUND OF THE INVENTION

At present, keeping a pet has become a popular hobby of people. Pets are family and friends. For keeping a pet, the owner usually cares for the pet. For example, cats need daily grooming, interaction and caressing. Because cats only take a bath for a long time, it is easy to cause various skin diseases. For dogs, compared with cats, although the frequency of bathing is higher and the cleaning care is better, incomplete drying after bathing can cause the dog's skin diseases. At present, to solve pet skin problems, pets are cared in pet stores, but the cost is high. Or, for home care, the owner buys deodorant, flea disinfectant, pet shampoo, etc. Some pets are sensitive, the daily chemical products are risky to the pet's health, or there are other problems such as incomplete cleaning.

In daily life, owners usually use pet combs to comb pets regularly. The existing pet combs can only be used for combing, which solves the problem of daily hair combing and removing floating hair. It is impossible to care for pet hair and skin. Furthermore, the existing combs cannot also solve the daily deodorization of pets, sterilization of hair and skin, and removal of mites. Thus, mites and bacteria may cause pet skin diseases and family allergies.

In order to solve the above problems, it's necessary to provide a pet treatment comb with a plasma generator which has the functions of deodorization, mite removal, sterilization and disinfection.

### SUMMARY OF THE INVENTION

One objective of the present invention is to provide a pet treatment comb with a plasma generator which has the functions of deodorization, mite removal, sterilization and disinfection.

To achieve the above objective, a pet treatment comb with a plasma generator includes a handle, a comb tooth portion, a plasma generator, and a rotary connection structure. The comb tooth portion and the plasma generator are rotatably connected to the handle through the rotary connection structure, and the plasma generator is arranged to provide plasma to the comb tooth portion.

Preferably, the handle includes an upper shell, a lower shell, and a middle shell between the upper shell and the lower shell.

Preferably, the pet treatment comb further includes a control board, a battery and a high-voltage package. The handle has a mounting cavity inside, and the control board, the battery and the high-voltage package are disposed in the mounting cavity.

Preferably, the pet treatment comb further includes a fan, and the fan is disposed in the mounting cavity.

Preferably, the rotary connection structure is provided with a mounting frame for mounting the comb tooth portion and the plasma generator and a connection portion for connecting the handle.

Preferably, the mounting frame includes a mounting frame body and a pushing frame, the pushing frame is movably disposed on the mounting frame body, and the comb tooth portion and the plasma generator are mounted on the mounting frame body.

Preferably, the pushing frame has a window for accommodating the plasma generator.

Preferably, the pushing frame includes a pressing part and a mounting part, and the mounting part is provided with a limit hole for limiting a movement stroke of the pushing frame.

Preferably, a first fixing part is protruded from the pushing frame, the mounting frame body has a second fixing part, and the first fixing part and the second fixing part are connected by an elastic element so as to constantly exert a force toward the second fixing part on the pushing frame.

Preferably, the pushing frame has an accommodating cavity inside, and a tail end of the comb tooth portion is inserted in the accommodating cavity and fixed on the mounting frame body.

Preferably, the connection portion is provided with a mounting hole and a rotary button, and the rotary button is mounted in the mounting hole.

Preferably, the rotary button is provided with a driving part, and when the rotary button is pressed and rotated, the driving part drives the connection portion to rotate.

Preferably, the handle has an accommodating groove, when the rotary button is pressed, the driving part is driven into the accommodating groove to release the driving part, and the rotary button is rotated to drive the connection portion to rotate.

Preferably, an upper end of the handle is provided with a mounting groove for mounting the rotary connection structure, the rotary connection structure protrudes and froms a connection shaft, and the connection shaft is provided with a gap.

In comparison with the prior art, the pet treatment comb of the present invention includes a handle, a comb tooth portion, a plasma generator, and a rotary connection structure. The comb tooth portion and the plasma generator are rotatably connected to the handle through the rotary connection structure, and the plasma generator is arranged to provide plasma to the comb tooth portion. The angle of the comb tooth portion can be flexibly adjusted by the rotary connection structure, which can care cats and dogs of different sizes and different parts of the pet's body. Through plasma technology, while combing pets, bacteria, mites and viruses on pets are surrounded by plasma clusters until they are decomposed or lose activity, so as to achieve the effects of deodorization, disinfection and sterilization. The pet treatment comb realizes the integration of combing, sterilization and deodorization, and there is no need to use daily chemical sterilization and deodorization products on the pet.

### BRIEF DESCRIPTION OF THE DRAWINGS

The accompanying drawings facilitate an understanding of the various embodiments of this invention. In such drawings:
FIG. 1 is a perspective view of a pet treatment comb with a plasma generator according to the present invention;
FIG. 2 is a perspective view of the pet treatment comb in FIG. 1 at another angle;
FIG. 3 is a perspective view of the pet treatment comb in FIG. 1 at another rotation angle;
FIG. 4 is an exploded view showing that an upper shell is in a disassembled state from the pet treatment comb;
FIG. 5 is an exploded view showing that a lower shell is in a disassembled state from the pet treatment comb;
FIG. 6 is an exploded view of the pet treatment comb of FIG. 1;
FIG. 7 is a cross-sectional view of the pet treatment comb of FIG. 1;
FIG. 8 is another cross-sectional view of the pet treatment comb of FIG. 1;
FIG. 9 is a partial exploded view of a comb tooth portion, a plasma generator, and a rotary connection structure of the pet treatment comb; and
FIG. 10 is another partial exploded view of a comb tooth portion, a plasma generator, and a rotary connection structure of the pet treatment comb.

In the aforementioned Figures:
Pet treatment comb 100; handle 1; upper shell 11; lower shell 12; middle shell 13; mounting cavity 14; mounting groove 15; locking position 16; comb tooth portion 2; fixing portion 21; comb tooth 22; plasma generator 3; rotary connection structure 4; mounting frame 41; mounting frame body 411; positioning part 4110; second fixing part 4111; elastic element 4112; fixing frame 4113; pushing frame 412; window 4120; pressing part 4121; mounting part 4122; limit hole 4123; first fixing part 4124; accommodating cavity 4125; cover body 413; connection portion 42; connection shaft 421; notch 422; mounting hole 423; rotary button 424; compression spring 425; driving part 426; accommodating groove 427; switch 5; control board 6; high-voltage package 7; battery 8; fan 9.

### DETAILED DESCRIPTION OF ILLUSTRATED EMBODIMENTS

In order to illustrate the technical solution in the embodiments of the present disclosure or the prior art more clearly, brief description would be made below to the drawings required in the embodiments of the present disclosure or the prior art. Obviously, the drawings in the following description are merely some of the embodiments of the present disclosure, and those skilled in the art could obtain other drawings according to the structures shown in the drawings without any creative efforts.

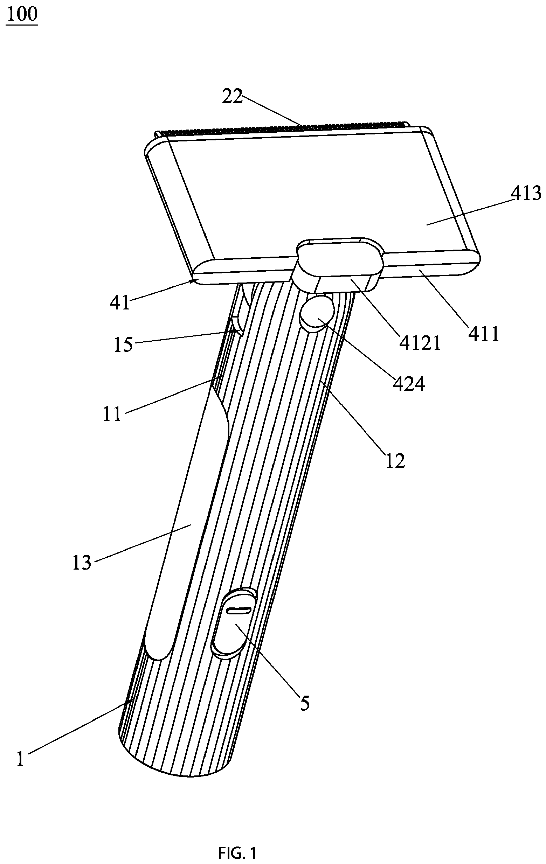

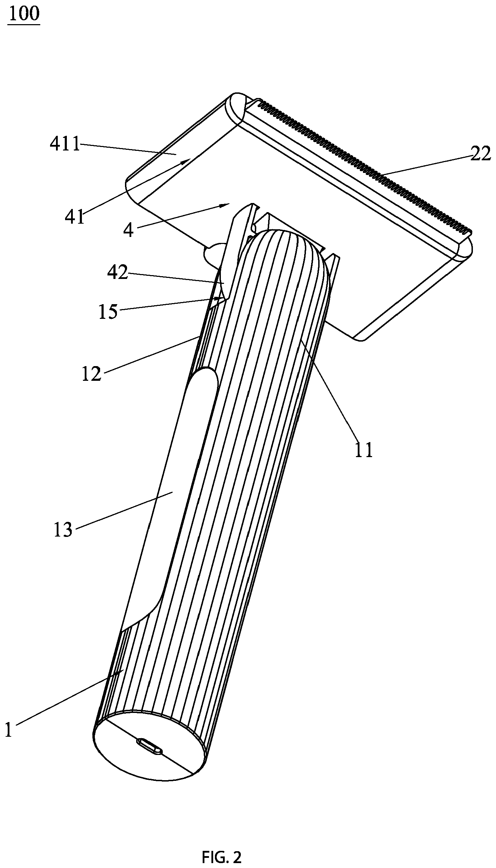

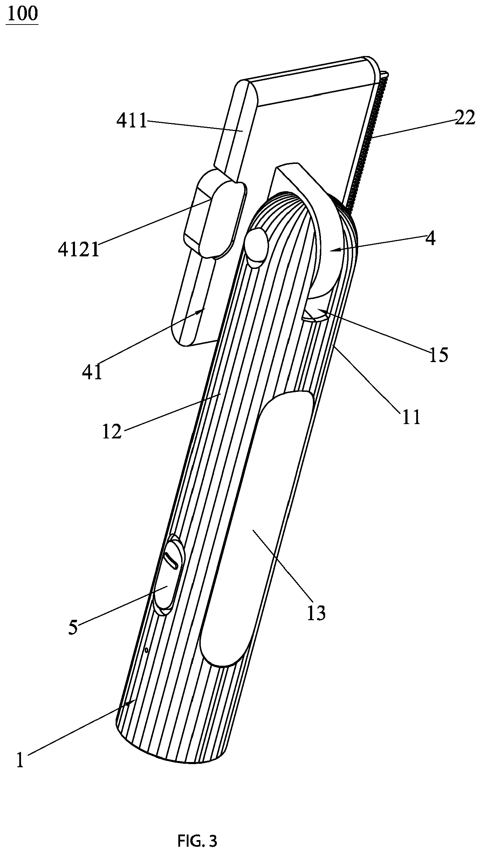

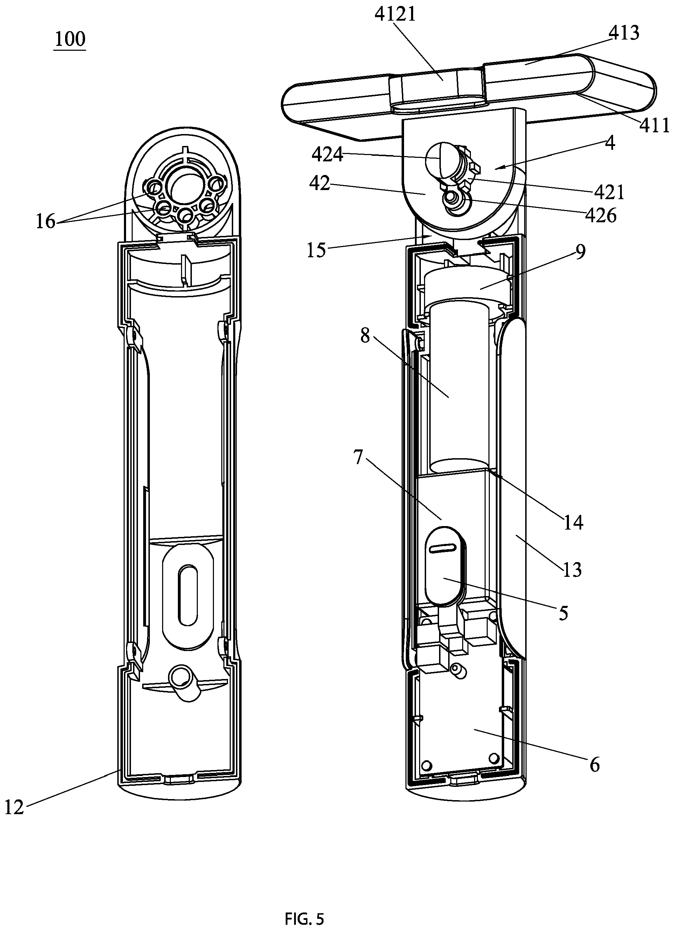

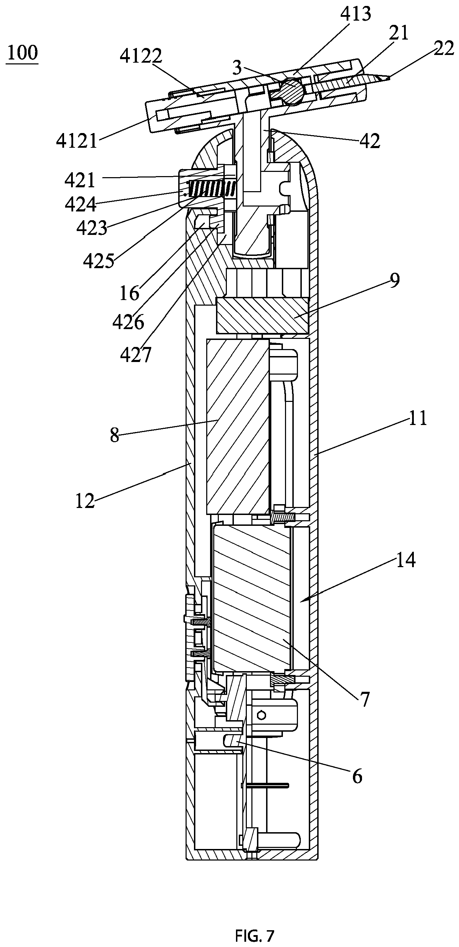

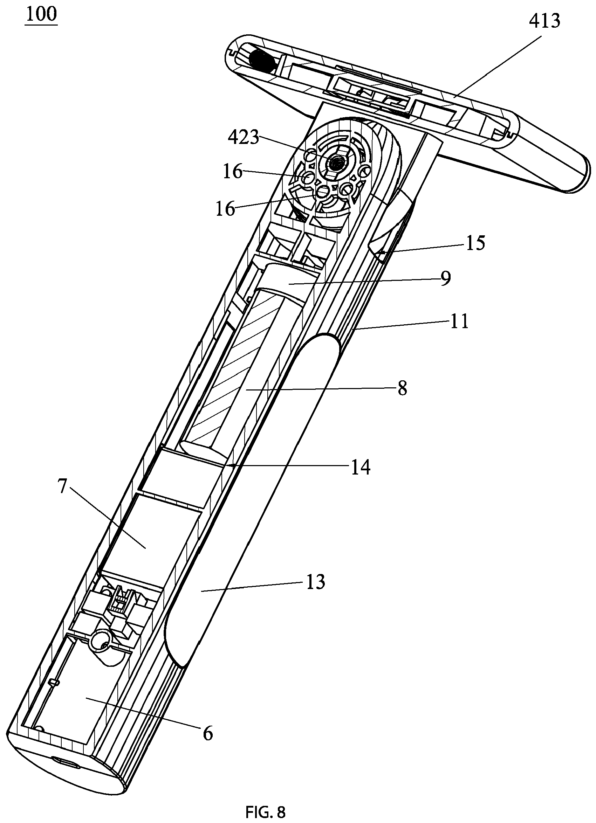

As shown in FIGS. 1-8, a pet treatment comb 100 includes a handle 1, a comb tooth portion 2, a plasma generator 3, a rotary connection structure 4 and a switch 5. The comb tooth portion 2 and the plasma generator 3 is rotatably connected to the handle 1 through the rotary connection structure 4, and the plasma generator 3 is used for delivering plasma to the comb tooth portion 2. As shown in FIG. 1 and FIG. 3, driven by the rotary connection structure 4, the comb tooth portion 2 can be at different inclination angles. Specifically, the plasma generator 3 is a plasma tube, and the pet treatment comb 100 is turned on through the switch 5.

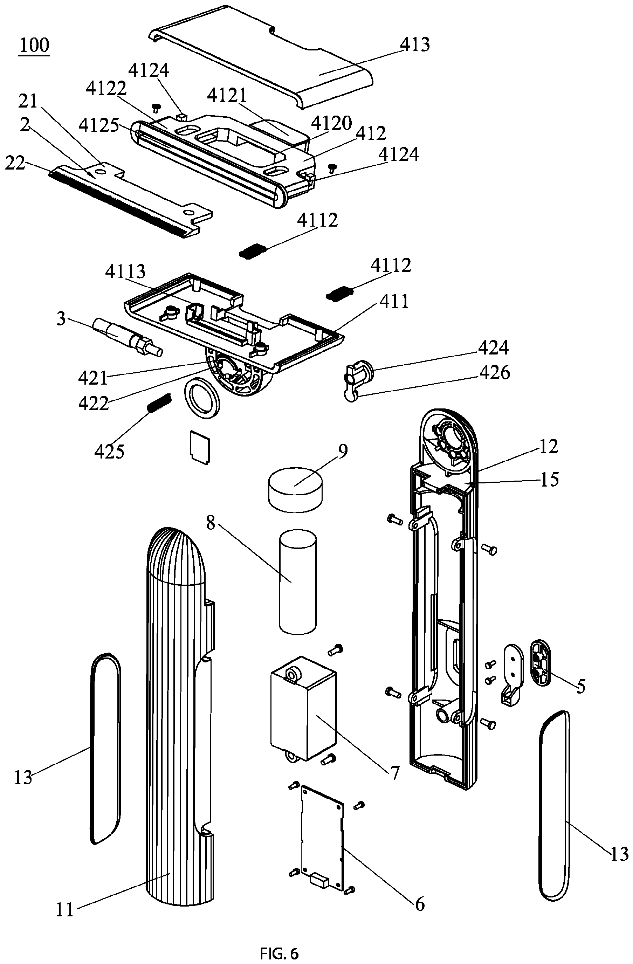

Please refer to FIG. 6, the handle 1 includes an upper shell 11, a lower shell 12 and a middle shell 13 located between the upper shell 11 and the lower shell 12, and the handle 1 has a mounting cavity 14 inside. Preferably, there are two middle shells 13, and the two middle shells 13 are respectively located on opposite sides of the handle 1 for decoration and anti-skid.

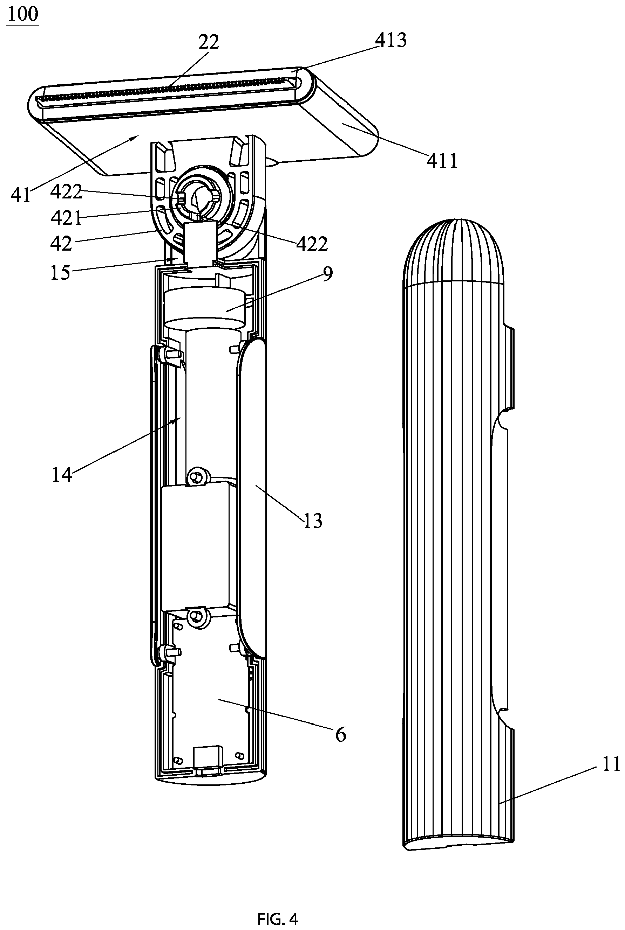

Please refer to FIGS. 4-8, the pet treatment comb 100 also includes a control board 6, a high-voltage package 7, a battery 8 and a fan 9. The control board 6, the high-voltage package 7, the battery 8 and the fan 9 are accommodated in the mounting cavity 14. The control board 6 controls the battery 8 to supply power to the high-voltage package 7, the fan 9 and the plasma tube of the pet treatment comb 100. The high-voltage package 7 provides pulse discharge on the plasma tube, so that the plasma tube generates plasma clusters. The fan 9 blows out the plasma clusters emitted by the plasma tube from an edge of the comb tooth portion 2 to sterilize the pet hair and skin and remove peculiar smell.

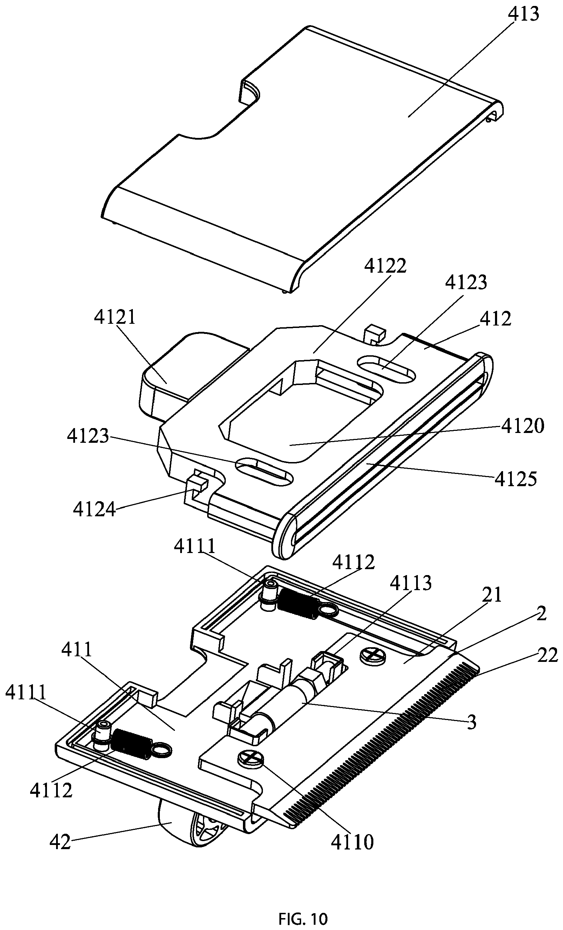

Please refer to FIGS. 4-10 again, the rotary connection structure 4 is provided with a mounting frame 41, a connection portion 42 and a cover body 413. Specifically, the mounting frame 41 is used to mount the comb tooth portion 2 and the plasma tube, the connection portion 42 is used to connect the handle 1, and the cover body 413 covers the mounting frame 41. The mounting frame 41 includes a mounting frame body 411 and a pushing frame 412, and the pushing frame 412 is movably disposed on the mounting frame body 411. The comb tooth portion 2 includes a fixing portion 21 and a comb tooth 22, and the comb tooth portion 2 and the plasma tube are mounted on the mounting frame body 411. Preferably, a fixing frame 4113 for fixing the plasma tube is protruded from the mounting frame body 411. The pushing frame 412 has a window 4120 that accommodates the plasma tube. Specifically, the window 4120 and the fixing frame 4113 correspond to each other, so that the mounting frame 41 having the mounting frame body 411 and the pushing frame 412 has a more compact structure and facilitates the maintenance of the plasma tube. Specifically, the pushing frame 412 includes a pressing part 4121 and a mounting part 4122. The window 4120 and a limit hole 4123 defining a movement stroke of the pushing frame 412 are defined on the mounting part 4122. Specifically, the mounting frame body 411 is provided with a positioning part 4110 which fixes the fixing portion 21 of the comb tooth portion 2. The positioning part 4110 passes through the limit hole 4123 of the pushing frame 412. When the pushing frame 412 moves along the mounting frame body 411, the positioning part 4110 moves relative to the limit hole 4123, and the plasma tube moves relative to the pushing frame 412 in the window 4120 of the pushing frame 412, and the maximum distance that the pushing frame 412 moves is the length of the limit hole 4123. Preferably, both sides of the pushing frame 412 respectively protrude a first fixing part 4124, and the mounting frame body 411 has a second fixing part 4111. The first fixing part 4124 and the second fixing part 4111 are connected by an elastic element 4112 so as to constantly exert a force toward the second fixing part 4111 on the pushing frame 412. In this embodiment, the elastic element 4112 is a tension spring, and both ends of the tension spring are respectively hooked on the first fixing part 4124 and the second fixing part 4111, but not limited thereto.

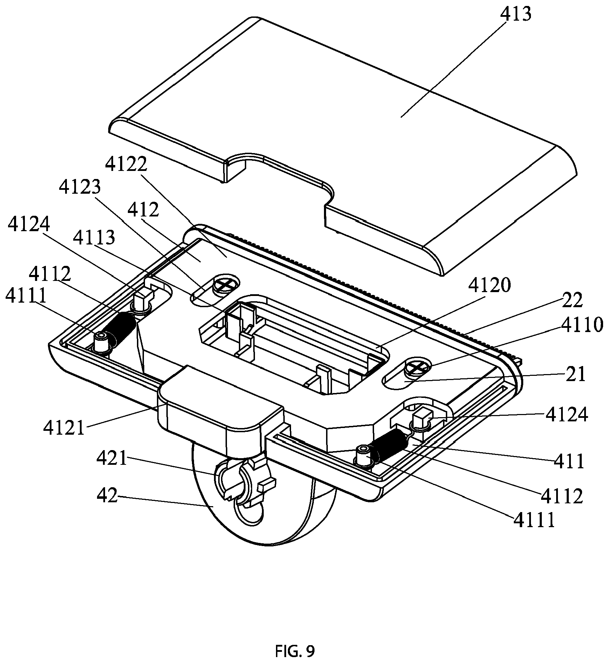

Thus, when the pressing part 4121 overcomes an elastic force of the elastic element 4112, the mounting part 4122 protrudes out and exposes relative to the mounting frame body 411. When the pressing part 4121 is released, under the action of the elastic element 4112, the pushing frame 412 is reset. Preferably, the pushing frame 412 has an accommodating cavity 4125 inside, and a tail end of the fixing portion 21 of the comb tooth portion 2 is inserted in the accommodating cavity 4125 and fixed on the mounting frame body 411 by the positioning part 4110 passing through the limit hole 4123. In this embodiment, the positioning part 4110 is a screw, but not limited thereto, as long as the fixing portion 21 can be fixed. Preferably, as shown in FIGS. 9-10, there are two limit holes 4123, two positioning parts 4110, two first fixing parts 4124, two second fixing portions 4111 and two elastic elements 4112, but the number is not limited to this.

As shown in FIGS. 4-6, an upper end of the handle 1 is provided with a mounting groove 15, and a connection shaft 421 is protruded from the connection portion 42. The connection portion 42 is inserted into the mounting groove 15 and fixed on the handle 1 through the connection shaft 421. Specifically, a notch 422 is opened at one end of the connection shaft 421, so that the fan 9 disposed inside the handle 1 can blow out the plasma clusters emitted by the plasma tube from the comb tooth portion 2. Preferably, the other end of the connection shaft 421 of the connection portion 42 is provided with a mounting hole 423 and has a rotary button 424, and the rotary button 424 is mounted in the mounting hole 423 and exposed outside the lower shell 12. A compression spring 425 is arranged between the mounting hole 423 and the rotary button 424, so as to drive the rotary button 424 to move in the mounting hole 423 by pressing. The rotary button 424 is provided with a driving part 426. When the rotary button 424 is pressed and rotated, the driving part 426 drives the connection portion 42 to rotate. Preferably, the lower shell 12 of the handle 1 has an accommodating groove 427. When the rotary button 424 is pressed, the driving part 426 enters the accommodating groove 427 to release the driving part 426, and the rotary button 424 is rotated to drive the connection portion 42 to rotate. When rotated to a specific position, the rotary button 424 is released, and the driving part 426 is engaged with the corresponding locking position 16 of the lower shell 12, thereby fixing the rotary connection structure 4.

Therefore, when the user uses the pet treatment comb 100, the switch 5 is turned on. The control board 6 controls the battery 8 to supply power to the high-voltage package 7, the fan 9 and the plasma tube. The high-voltage package 7 provides pulse discharge on the plasma tube to generate plasma clusters. The fan 9 blows the plasma clusters out from the edge of the comb tooth portion 2, which disinfects and sterilizes hair and skin of the pet and removes the odor. By pressing the pressing part 4121 of the pushing frame 412, the pushing frame 412 moves along the positioning part 4110 through the limit hole 4123 thereby removing the pet hair in the comb tooth 22. When it is necessary to adjust the direction of the comb tooth portion 2, the user presses and rotates the rotary button 424 to adjust the angle of the comb tooth portion 2, which is convenient for combing different parts of the pet.

In comparison with the prior art, the pet treatment comb 100 of the present invention includes a handle 1, a comb tooth portion 2, a plasma generator 3, and a rotary connection structure 4. The comb tooth portion 2 and the plasma generator 3 are rotatably connected to the handle 1 through the rotary connection structure 4, and the plasma generator 3 is arranged to provide plasma to the comb tooth portion 2. The angle of the comb tooth portion 2 can be flexibly adjusted by the rotary connection structure 4, which can care cats and dogs of different sizes and different parts of the pet. Through plasma technology, while combing pets, bacteria, mites and viruses on pets are surrounded by plasma clusters until they are decomposed or lose activity, so as to achieve the effects of deodorization, disinfection and sterilization. The pet treatment comb 100 realizes the integration of combing, sterilization and deodorization, and there is no need to use daily chemical sterilization and deodorization products on the pet.

## Claims

1. A pet treatment comb (100) with a plasma generator (3) comprising a handle (1), a comb tooth portion (2), a plasma generator (3), and a rotary connection structure (4), the comb tooth portion (2) and the plasma generator (3) being rotatably connected to the handle (1) through the rotary connection structure (4), and the plasma generator (3) being arranged to provide plasma to the comb tooth portion (2).

2. The pet treatment comb (100) with a plasma generator (3) according to claim 1, wherein the handle (1) comprises an upper shell (11), a lower shell (12), and a middle shell (13) between the upper shell (11) and the lower shell (12).

3. The pet treatment comb (100) with a plasma generator (3) according to claim 1, further comprising a control board (6), a battery (8) and a high-voltage package (7), the handle (1) having a mounting cavity (14) inside, and the control board (6), the battery (8) and the high-voltage package (7) being disposed in the mounting cavity (14).

4. The pet treatment comb (100) with a plasma generator (3) according to claim 1, further comprising a fan (9), the handle (1) having a mounting cavity (14) inside, and the fan (9) being disposed in the mounting cavity (14).

5. The pet treatment comb (100) with a plasma generator (3) according to claim 1, wherein the rotary connection structure (4) is provided with a mounting frame (41) for mounting the comb tooth portion (2) and the plasma generator (3) and a connection portion (42) for connecting the handle (1).

6. The pet treatment comb (100) with a plasma generator (3) according to claim 5, wherein the mounting frame (41) comprises a mounting frame body (411) and a pushing frame (412), the pushing frame (412) is movably disposed on the mounting frame body (411), and the comb tooth portion (2) and the plasma generator (3) are mounted on the mounting frame body (411).

7. The pet treatment comb (100) with a plasma generator (3) according to claim 6, wherein the pushing frame (412) has a window (4120) for accommodating the plasma generator (3).

8. The pet treatment comb (100) with a plasma generator (3) according to claim 6, wherein the pushing frame (412) comprises a pressing part (4121) and a mounting part (4122), and the mounting part (4122) is provided with a limit hole (4123) for limiting a movement stroke of the pushing frame (412).

9. The pet treatment comb (100) with a plasma generator (3) according to claim 6, wherein a first fixing part (4124) is protruded from the pushing frame (412), the mounting frame body (411) has a second fixing part (4111), and the first fixing part (4124) and the second fixing part (4111) are connected by an elastic element (4112) so as to constantly exert a force toward the second fixing part (4111) on the pushing frame (412).

10. The pet treatment comb (100) with a plasma generator (3) according to claim 6, wherein the pushing frame (412) has an accommodating cavity (4125) inside, and a tail end of the comb tooth portion (2) is inserted in the accommodating cavity (4125) and fixed on the mounting frame body (411).

11. The pet treatment comb (100) with a plasma generator (3) according to claim 5, wherein the connection portion (42) is provided with a mounting hole (423) and a rotary button (424), and the rotary button (424) is mounted in the mounting hole (423).

12. The pet treatment comb (100) with a plasma generator (3) according to claim 11, wherein the rotary button (424) is provided with a driving part (426), and when the rotary button (424) is pressed and rotated, the driving part (426) drives the connection portion (42) to rotate.

13. The pet treatment comb (100) with a plasma generator (3) according to claim 12, wherein the handle (1) has an accommodating groove (427), when the rotary button (424) is pressed, the driving part (426) is driven into the accommodating groove (427) to be released, and the rotary button (424) is rotated to drive the connection portion (42) to rotate.

14. The pet treatment comb (100) with a plasma generator (3) according to claim 1, wherein an upper end of the handle (1) is provided with a mounting groove (15) for mounting the rotary connection structure (4), a connection shaft (421) is protruded from the rotary connection structure (4), and the connection shaft (421) is provided with a notch (422).
